(19) Europäisches Patentamt / European Patent Office / Office européen des brevets

(11) **EP 3 258 690 A1**

(12) **EUROPEAN PATENT APPLICATION**

(43) Date of publication:
**20.12.2017 Bulletin 2017/51**

(51) Int Cl.:
**H04N 19/156** (2014.01)  **H04N 19/42** (2014.01)
**H04N 19/523** (2014.01)

(21) Application number: **17169225.4**

(22) Date of filing: **03.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.06.2016 JP 2016119176**

(71) Applicant: **Fujitsu Limited**
**Kawasaki-shi, Kanagawa 211-8588 (JP)**

(72) Inventors:
• **Tsukuda, Noriaki**
  **Fukuoka, 814-8588 (JP)**
• **Kobayashi, Shunsuke**
  **Fukuoka, 814-8588 (JP)**
• **Hayashi, Shintaro**
  **Fukuoka, 814-8588 (JP)**
• **Misuda, Yasuo**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **IMAGE ENCODING APPARATUS, IMAGE ENCODING METHOD, AND IMAGE ENCODING PROGRAM STORED IN STORAGE MEDIUM**

(57) An image encoding method causing a computer to execute a process, the process includes: calculating, from an encoding throughput for image data to be encoded that is obtained based on a parameter regarding an encoding throughput, and a maximum throughput of an image encoding apparatus, an available throughput that occurs in a process of encoding the image data to be encoded; allocating, in accordance with the calculated available throughput, a function of enhancing precision of encoding to the image data to be encoded; and encoding, by using the allocated function, the image data to be encoded.

FIG. 1

EP 3 258 690 A1

**Description**

FIELD

The embodiment discussed herein is related to an image encoding apparatus, an image encoding method, and an image encoding program stored in a non-transitory computer-readable storage medium.

BACKGROUND

In image data encoding apparatuses, techniques for reducing idle time in encoding processing have been proposed.

As an example, a data encoding apparatus has been proposed in which a data holding unit (buffer) is provided between a coefficient bit modeling unit and a multiplier quotient (MQ) coder, and in which coding information generated in the coefficient bit modeling unit is temporarily held in the data holding unit and then is read and processed by the MQ coder. In this data encoding apparatus, the timing when coding information is generated in the coefficient bit modeling unit does not have to coincide with the timing when coding information is processed in the MQ coder, thereby reducing wasted idle time (see Japanese Laid-open Patent Publication No. 2004-320157).

Furthermore, a method for a video encoding process has been proposed in which mode decision processing and bit stream packing are performed in parallel for various frames in a sequence. This method reduces the amount of idle time for both mode decision processing logic and bit stream packing logic (see Japanese National Publication of International Patent Application No. 2014-529256).

As an example, there is an image encoding apparatus that has a high processing capability of encoding high-resolution image data, such as 4K ($3,840 \times 2,160$ pixels, a picture rate of 60 p) or 8K ($7,680 \times 4,320$ pixels, a picture rate of 120 p) image data, with real-time processing. Such an image encoding apparatus is also capable of encoding image data that is able to be encoded with a lower throughput than a maximum throughput with which real time processing is enabled.

In this case, however, encoding processing of one-frame image data of image data that is able to be encoded with a low throughput is completed in a shorter time period than a time period that is basically usable for encoding one-frame image data, and thus idle time occurs in the encoding processing performed by the image encoding apparatus. That is, no good use is made of the processing capability of the image encoding apparatus.

In an aspect of the embodiment, image quality is enhanced.

SUMMARY

According to an aspect of the invention, an image encoding method causing a computer to execute a process, the process includes: calculating, from an encoding throughput for image data to be encoded that is obtained based on a parameter regarding an encoding throughput, and a maximum throughput of an image encoding apparatus, an available throughput that occurs in a process of encoding the image data to be encoded; allocating, in accordance with the calculated available throughput, a function of enhancing precision of encoding to the image data to be encoded; and encoding, by using the allocated function, the image data to be encoded.

The object and advantages of the invention will be realized and attained by means of the elements and combinations particularly pointed out in the claims.

BRIEF DESCRIPTION OF DRAWINGS

FIG. 1 is a functional block diagram illustrating a schematic configuration of an image encoding apparatus according to the embodiment;

FIG. 2 illustrates an example of an image quality enhancement function table;

FIG. 3 is a block diagram illustrating a schematic configuration of a computer that functions as the image encoding apparatus according to the embodiment;

FIG. 4 is a flowchart illustrating an example of image encoding processing in the embodiment;

FIG. 5 illustrates available throughputs in a comparative example; and

FIG. 6 illustrates use of the processing capability of the image encoding apparatus in the embodiment.

DESCRIPTION OF EMBODIMENT

An example of the embodiment will be described in detail below with reference to the drawings.

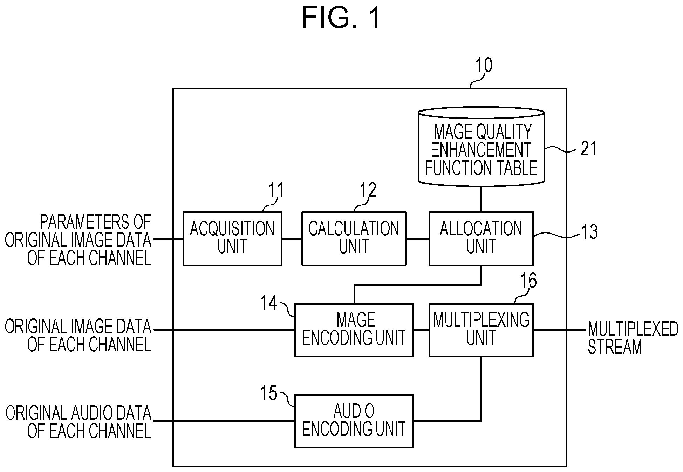

As illustrated in FIG. 1, an image encoding apparatus 10 according to the embodiment encodes and multiplexes both original image data and original audio data to output them as a multiplexed stream. The image encoding apparatus 10 performs multi-channel encoding processing in which pieces of original image data and pieces of original audio data of a plurality of channels are encoded.

As illustrated in FIG. 1, the image encoding apparatus 10 functionally includes an acquisition unit 11, a calculation unit 12, an allocation unit 13, an image encoding unit 14, an audio encoding unit 15, and a multiplexing unit 16. In a certain storage area of the image encoding apparatus 10, an image quality enhancement function table 21 is stored.

The acquisition unit 11 acquires parameters of original image data of each channel that have been set externally. Parameters here are parameters regarding a throughput in encoding of original image data. Examples of parameters include an image horizontal size, an image vertical size, a picture rate, a pixel bit depth, and a YUV format.

An image horizontal size and an image vertical size refer to an image size of one picture specified in units of pixels. In some cases, image sizes are represented below by 4K (3,840 × 2,160 pixels), high definition (HD) (1,920 × 1,080 pixels), and standard definition (SD) (720 × 480 pixels). A picture rate is the number of pictures per second. A pixel bit depth is the number of bits by which one pixel is represented, and 8 bits or 10 bits are typically used. A YUV format is a typical image format used in inputs in an image encoding apparatus, and examples of the type of YUV format include YUV422 and YUV420 based on densities of color difference components.

The acquisition unit 11 transfers the acquired parameters of each channel to the calculation unit 12.

The calculation unit 12 calculates, based on the parameters of each channel transferred from the acquisition unit 11, an encoding throughput for the original image data of each channel. The calculation unit 12 also calculates a maximum value of throughput (hereinafter referred to as "maximum throughput") usable for encoding the original image data in the image encoding apparatus 10. Then, the calculation unit 12 calculates, based on the encoding throughput for the original image data and the maximum throughput, an available throughput that is an unused portion of the maximum throughput. Note that "maximum throughput" is determined in accordance with hardware specifications of an apparatus and implementation program specifications, and thus "maximum throughput" may be stored in a certain nonvolatile memory in advance. In calculation of "maximum throughput", "maximum throughput" stored in the nonvolatile memory may be read. Alternatively, "maximum throughput" may be calculated based on the hardware specifications and the implementation program specifications every time the apparatus is powered on, thereby enabling changes in program specifications to be accommodated.

Specifically, the calculation unit 12 calculates, as an index indicating an encoding throughput for the original image data of each channel, "throughput per second for channel k" represented by, for example, the following equation (1) based on the parameters acquired by the acquisition unit 11.

$$\text{throughput per second for channel k} = \text{image horizontal size} \times \text{image vertical size} \times \text{picture rate} \times \alpha \qquad \dots (1)$$

In equation (1), $\alpha$ denotes a weight variable used in the case where an encoding throughput for original image data of channel k is changed depending on a pixel bit depth and a YUV format. Specifically, in the case where the image encoding apparatus 10 is capable of encoding image data having a pixel bit depth of 10 bits and being in a YUV422 format, assume that $\alpha$ for the case of the pixel bit depth of 10 bits and the YUV422 format is 1. Then, $\alpha = 1$ serves as a standard, and $\alpha$ is adjusted according to a pixel bit depth and the type of YUV format acquired for channel k.

For example, assume that, in the case of a pixel bit depth of 8 bits, a throughput is 0.9 times as much as in the case of a pixel bit depth of 10 bits, and that, in the case of a YUV420 format, a throughput is 0.8 times as much as in the case of the YUV422 format. In this case, in calculating a throughput of equation (1) for original image data having a pixel bit depth of 8 bits and being in the YUV420 format, $\alpha$ is $0.9 \times 0.8 = 0.72$.

For example, assume that original image data of a channel 0 has an image size of HD (1,920 × 1,080 pixels), a picture rate of 60 p, and a pixel bit depth of 10 bits, and is in the YUV422 format. In this case, a throughput per second for the channel 0 is as follows.

throughput per second for channel 0 = 1,920 × 1,080 × 60 × 1 = 124,416,000

For example, assume that original image data of a channel 1 has an image size of SD (720 × 480 pixels), a picture rate of 60 p, and a pixel bit depth of 10 bits, and is in the YUV422 format. In this case, a throughput per second for the channel 1 is as follows.

$$\text{throughput per second for channel 1} = 720 \times 480 \times 60 \times 1 =$$

$$20{,}736{,}000$$

Furthermore, the calculation unit 12 calculates an available throughput per second of the image encoding apparatus 10 using the following equation (2).

$$\text{available throughput} = \text{maximum throughput per second of image}$$

$$\text{encoding apparatus 10} - \Sigma[k = 0, n - 1] \text{ throughput per second for channel } k$$

$$\dots (2)$$

(n is the number of channels)
In equation (2), "maximum throughput per second of image encoding apparatus 10" is a fixed value dependent on the processing capability of the image encoding apparatus 10. For example, assume that the image encoding apparatus 10 is capable of processing image data having an image size of 4K (3,840 $\times$ 2,160 pixels), a picture rate of 60 p, and a pixel bit depth of 10 bits, and being in the YUV422 format. In this case, a maximum throughput per second of the image encoding apparatus 10 is as follows. From the pixel bit depth and the YUV format, assume that $\alpha$ is 1.

$$\text{maximum throughput per second of image encoding apparatus 10}$$

$$= 3{,}840 \times 2{,}160 \times 60 \times 1 = 497{,}664{,}000$$

In the case where the above-described image encoding apparatus 10 processes two channels of the channel 0 (HD, 60 p, 10 bits, YUV422) and the channel 1 (SD, 60 p, 10 bits, YUV422), an available throughput is as follows.

$$\text{available throughput} = 497{,}664{,}000 - (124{,}416{,}000 + 20{,}736{,}000)$$

$$= 352{,}512{,}000$$

The calculation unit 12 transfers the calculated available throughput to the allocation unit 13.
The allocation unit 13 distributes the available throughput transferred from the calculation unit 12 to each channel and allocates, to each channel, an image quality enhancement function based on an available throughput distributed to the channel.
Specifically, the allocation unit 13 distributes the available throughput in accordance with a ratio between throughputs per second for the respective channels, and priorities of the channels that have been assigned in advance. For example, in the case where multi-channel encoding of two channels of the channel 0 (HD) and the channel 1 (SD) is performed, the throughput for SD is about one-sixth of the throughput for HD, and thus the available throughput is distributed in a ratio of channel 0 (HD) : channel 1 (SD) = 6 $\times$ $\beta$ : 1 $\times$ $\gamma$, where $\beta$ and $\gamma$ are each a weight variable equal to or greater than 0 based on a priority of each channel. A priority of each channel and a weight variable may be appropriately set in accordance with a specification, such as giving priority to HD over SD in terms of image quality enhancement. For the sake of simplicity, assume below that $\beta$ = 1, and $\gamma$ = 1. That is, the above calculated available throughput (352,512,000) is distributed to the channel 0 (HD) and the channel 1 (SD) as follows.

$$\text{available throughput distributed to channel 0 (HD)} = 352{,}512{,}000 \times$$

$$6/7 = 302{,}153{,}142$$

$$\text{available throughput distributed to channel 1 (SD)} = 352{,}512{,}000 \times$$

$$1/7 = 50{,}358{,}857$$

Examples of an image quality enhancement function typically include vector search functions using reduced images with different sizes, a vector search function using a prediction image, and a prediction mode determination function. An image quality enhancement function is not limited to these examples and may be a function capable of enhancing the precision of encoding when used in encoding, that is, a function capable of reducing degradation of image quality due to encoding. In each image quality enhancement function, in the case where the number of images or the number of modes that are referred to in the function is increased, processing is repeated the number of times corresponding to the increased number of images or modes, thereby increasing a throughput in proportion to the number of repetitions. A throughput and a maximum number of repetitions are fixed values dependent on the processing capability of the image encoding apparatus 10, such as the number of parallelizable processes in the image encoding apparatus 10 or the bandwidth of a memory.

In the embodiment, throughputs and maximum numbers of repetitions for these image quality enhancement functions are set in the image quality enhancement function table 21. Then, the allocation unit 13 allocates, to each channel, an image quality enhancement function based on an available throughput distributed to the channel with reference to the image quality enhancement function table 21.

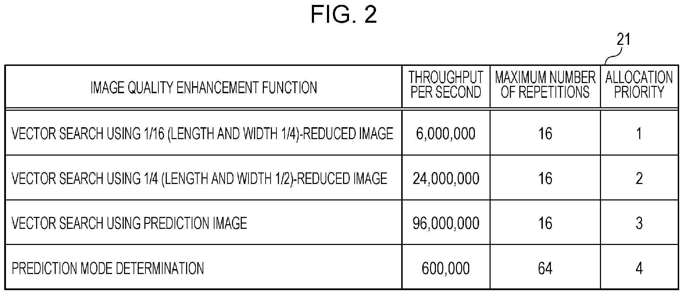

FIG. 2 illustrates an example of the image quality enhancement function table 21. The image quality enhancement function table 21 illustrated in FIG. 2 stores, for each image quality enhancement function, pieces of information of a throughput per second, a maximum number of repetitions, and an allocation priority that are associated with one another. A throughput per second and a maximum number of repetitions are values provided when each image quality enhancement function is applied to encoding processing of original image data having an image size of 4K and a pixel bit depth of 10 bits, and being in the YUV422 format. The unit of a throughput per second is the same as the unit of a throughput per second of the image encoding apparatus 10.

Allocation priorities indicate which of the image quality enhancement functions set in the image quality enhancement function table 21 is allocated on a priority basis. For example, allocation priorities may be assigned so that priority is given in descending order of image quality enhancement effectiveness obtained by performing encoding using each image quality enhancement function.

An example will be described where image quality enhancement functions are allocated to two channels of the channel 0 (HD, 60 p, 10 bits, YUV422) and the channel 1 (SD, 60 p, 10 bits, YUV422) with reference to the image quality enhancement function table 21 illustrated in FIG. 2.

The allocation unit 13 calculates a throughput ratio between each throughput estimated in the image quality enhancement function table 21 and a throughput for each channel. Here, with respect to the channel 0, a throughput ratio is 1/4 because there is a difference between image sizes 4K and HD. With respect to the channel 1, a throughput ratio is 1/24 because there is a difference between image sizes 4K and SD.

Then, the allocation unit 13 allocates, in accordance with the available throughput of 302,153,142 distributed to the channel 0 (HD), "vector search using 1/16 (length and width 1/4)-reduced image" ranked first in allocation priority to the channel 0 (HD) from the image quality enhancement function table 21. Because of $302{,}153{,}142 \geq (6{,}000{,}000$ (throughput per second) $\times$ 1/4 (throughput ratio) $\times$ 16 (maximum number of repetitions)), the allocation unit 13 allocates "vector search using 1/16 (length and width 1/4)-reduced image" for 16 times. A remaining available throughput is $302{,}153{,}142 - 6{,}000{,}000 \times 1/4 \times 16 = 278{,}153{,}142$.

The allocation unit 13 similarly calculates, in accordance with the remaining available throughput, in descending order of allocation priority, how many times each image quality enhancement function is able to be repeated and allocates the image quality enhancement function to the channel 0 (HD). The allocation unit 13 similarly performs calculations and allocates each image quality enhancement function to the channel 1 (SD).

In this example, the following image quality enhancement functions are finally allocated to each channel.

channel 0 (HD)

vector search using 1/16 (length and width 1/4)-reduced image :16 times
vector search using 1/4 (length and width 1/2)-reduced image :16 times
vector search using prediction image :7 times
prediction mode determination :64 times

channel 1 (SD)

vector search using 1/16 (length and width 1/4)-reduced image :16 times
vector search using 1/4 (length and width 1/2)-reduced image :16 times
vector search using prediction image :7 times
prediction mode determination :64 times

The image encoding unit 14 encodes the original image data of each channel by using the image quality enhancement functions allocated by the allocation unit 13 and outputs it as encoded image data. That is, the image encoding unit 14 performs, in addition to typical encoding processing based on a predetermined standard, encoding by allocating the image quality enhancement functions. Examples of a predetermined standard may include moving picture experts group (MPEG)-2 video, H.264/MPEG4 advanced video coding (AVC), and H.265/high efficiency video coding (HEVC).

The audio encoding unit 15 encodes original audio data of each channel in accordance with a predetermined standard and outputs it as encoded audio data. Examples of a predetermined standard may include MPEG-1 audio, MPEG2/4 advanced audio coding (AAC), and MPEG4 high-efficiency (HE)-AAC.

The multiplexing unit 16 generates, in accordance with a predetermined standard, multiplex data involved in multiplexing and audio-video (AV) synchronization of the encoded image data output from the image encoding unit 14 and the encoded audio data output from the audio encoding unit 15. Examples of a predetermined standard may include an MPEG-2 transport stream (TS) standard and an MPEG-H MPEG media transport (MMT) standard. Data involved in multiplexing is, according to the MPEG-2 TS standard, a TS header, a packetized elementary stream (PES) header, a program association table (PAT), a program map table (PMT), and a program clock reference (PCR), for example. Data involved in AV synchronization is time of presentation (presentation time stamp (PTS)) for image data and audio data to be written in a PES header, for example.

Then, the multiplexing unit 16 multiplexes the encoded image data, the encoded audio data, and the multiplex data into one stream in accordance with the predetermined standard.

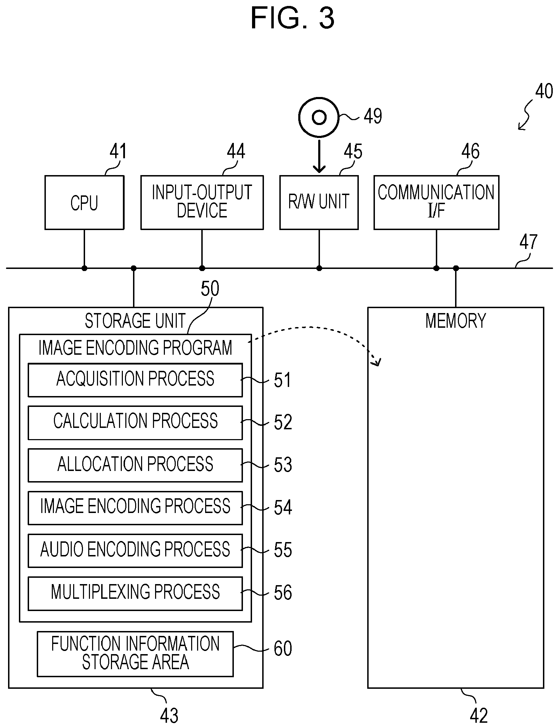

The image encoding apparatus 10 may be implemented by a computer 40 illustrated in FIG. 3, for example. The computer 40 includes a central processing unit (CPU) 41, a memory 42 serving as a temporary storage area, and a nonvolatile storage unit 43. The computer 40 further includes an input-output device 44, a read/write (R/W) unit 45 that controls reading and writing of data from and to a recording medium 49, and a communication interface (I/F) 46. The CPU 41, the memory 42, the storage unit 43, the input-output device 44, the R/W unit 45, and the communication I/F 46 are connected to one another via a bus 47.

The storage unit 43 may be implemented by a hard disk drive (HDD), a solid state drive (SSD), a flash memory, or the like. The storage unit 43 serving as a storage medium stores an image encoding program 50 for causing the computer 40 to function as the image encoding apparatus 10. The image encoding program 50 includes an acquisition process 51, a calculation process 52, an allocation process 53, an image encoding process 54, an audio encoding process 55, and a multiplexing process 56. The storage unit 43 further includes a function information storage area 60 in which function information constituting the image quality enhancement function table 21 is stored.

The CPU 41 reads the image encoding program 50 from the storage unit 43 to load it into the memory 42 and executes the processes included in the image encoding program 50 sequentially. The CPU 41 operates as the acquisition unit 11 illustrated in FIG. 1 by executing the acquisition process 51. The CPU 41 also operates as the calculation unit 12 illustrated in FIG. 1 by executing the calculation process 52. The CPU 41 also operates as the allocation unit 13 illustrated in FIG. 1 by executing the allocation process 53. The CPU 41 also operates as the image encoding unit 14 illustrated in FIG. 1 by executing the image encoding process 54. The CPU 41 also operates as the audio encoding unit 15 illustrated in FIG. 1 by executing the audio encoding process 55. The CPU 41 also operates as the multiplexing unit 16 illustrated in FIG. 1 by executing the multiplexing process 56. Furthermore, the CPU 41 reads function information from the function information storage area 60 to load it as the image quality enhancement function table 21 into the memory 42. Thus, the computer 40 executing the image encoding program 50 functions as the image encoding apparatus 10.

A function implemented by the image encoding program 50 may be implemented by a semiconductor integrated circuit, or more specifically, an application specific integrated circuit (ASIC), for example.

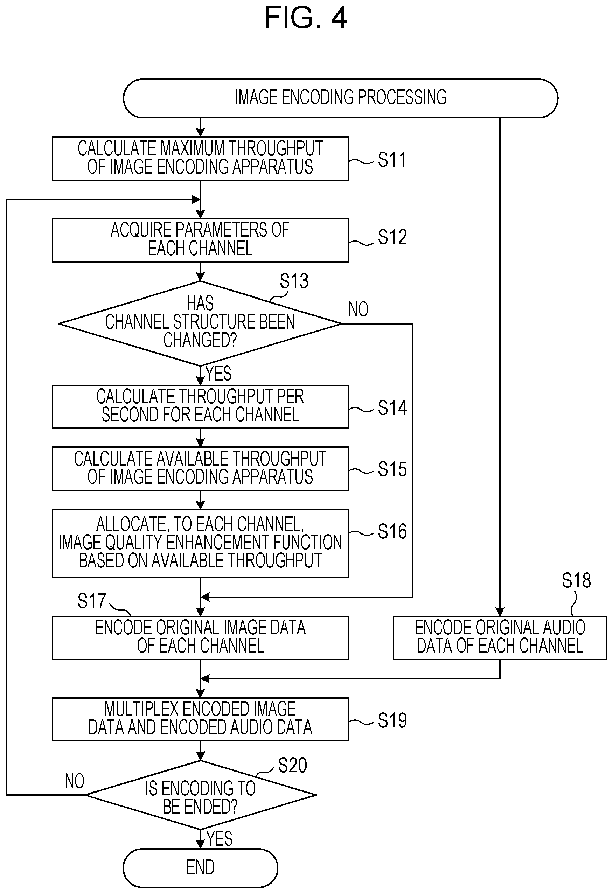

Next, the action of the image encoding apparatus 10 according to the embodiment will be described. When original image data and original audio data are input to the image encoding apparatus 10, image encoding processing illustrated in FIG. 4 is executed in the image encoding apparatus 10.

In step S11, the calculation unit 12 calculates a maximum throughput per second of the image encoding apparatus 10.

Then, in step S12, the acquisition unit 11 acquires, for each processing unit in real time processing in encoding, parameters of original image data of each channel that have been set externally.

Subsequently, in step S13, the acquisition unit 11 determines, based on the acquired parameters, whether a channel structure of the input original image data has been changed. When at least one of the number of channels of original image data and the parameters of the original image data of each channel differs from that of original image data in a previous processing unit, a determination of YES is made, and processing proceeds to step S14. On the other hand, when the channel structure has not been changed, processing proceeds to step S17.

In step S14, the calculation unit 12 calculates, for each channel, "throughput per second for channel k" represented by, for example, equation (1) based on the parameters of each channel acquired by the acquisition unit 11.

Then, in step S15, the calculation unit 12 calculates, according to, for example, equation (2), an available throughput per second of the image encoding apparatus 10 by using the maximum throughput per second of the image encoding apparatus 10 calculated in step S11 and the throughput per second for each channel calculated in step S14.

Then, in step S16, the allocation unit 13 distributes the available throughput calculated by the calculation unit 12 to each channel and allocates, to each channel, an image quality enhancement function based on an available throughput distributed to the channel with reference to the image quality enhancement function table 21.

Subsequently, in step S17, the image encoding unit 14 encodes the original image data of each channel by using the image quality enhancement function allocated by the allocation unit 13 and outputs it as encoded image data.

In parallel with the process of step S17, the audio encoding unit 15 encodes original audio data of each channel and outputs it as encoded audio data in step S18.

Then, in step S19, the multiplexing unit 16 generates multiplex data involved in multiplexing and AV synchronization of the encoded image data output from the image encoding unit 14 and the encoded audio data output from the audio encoding unit 15. Then, the multiplexing unit 16 multiplexes the encoded image data, the encoded audio data, and the multiplex data into one stream.

Subsequently, in step S20, the acquisition unit 11 determines whether original image data and original audio data in a subsequent processing unit have been input to determine whether to end encoding. If encoding is to be performed continuously, processing returns to step S12, and if encoding is to be ended, the image encoding processing ends.

As described above, an image encoding apparatus according to the embodiment calculates an available throughput of the image encoding apparatus, allocates an image quality enhancement function based on the available throughput to original image data, and encodes the original image data by using the image quality enhancement function. This enables maximum use of the processing capability of the image encoding apparatus and enhancement of image quality.

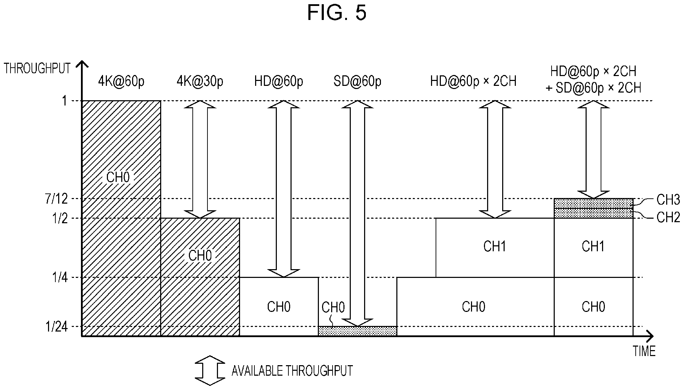

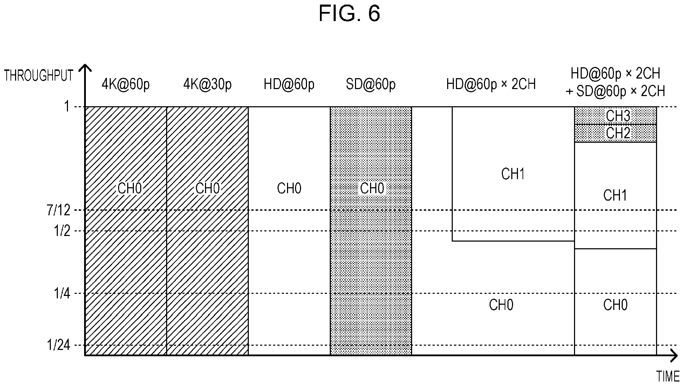

As a comparative example, FIG. 5 schematically illustrates throughputs provided in the case where, when original image data that is able to be encoded with a lower encoding throughput than a maximum throughput of the image encoding apparatus is encoded, allocation of an image quality enhancement function based on an available throughput like that described in the embodiment is not performed. Similarly, FIG. 6 schematically illustrates throughputs provided in the case where the embodiment is applied. In FIGs. 5 and 6, the horizontal axis represents time course of encoding, the vertical axis represents maximum throughput of the image encoding apparatus in each time period, and the maximum throughput of the image encoding apparatus is 1. Furthermore, the case is illustrated where the image encoding apparatus has the processing capability of dealing with original image data having an image size of 4K and a picture rate of 60 p (hereinafter referred to as "4K@60p", and original image data having other parameters is represented in the same way) at the maximum.

As illustrated in FIG. 5, with respect to the throughput for 4K@60p, throughputs for 4K@30p, HD@60p, SD@60p, HD@60p $\times$ 2CH, and HD@60p $\times$ 2CH + SD@60p $\times$ 2CH are 1/2, 1/4, 1/24, 1/2, and 7/12, respectively. That is, an available throughput occurs in each time period in real time processing. In the case of 4K@30p, the processing capability of the image encoding apparatus substantially enables encoding processing for two channels to be performed. In the comparative example, however, only the same processing as encoding processing of 4K@30p for two channels is performed on 4K@30p1CH, which refers to 4K@30p of one channel, and thus the image quality of the encoded 4K@30p1CH is comparable to the image quality provided when 4K@30p of two channels has been encoded.

On the other hand, in the embodiment, an available throughput is allocated to an image quality enhancement function, therefore enabling maximum use of the processing capability of the image encoding apparatus as illustrated in FIG. 6. Then, the image quality enhancement is performed, thereby enhancing image quality provided after encoding. FIG. 6 illustrates an example where, in any case, a throughput reaches a maximum value of the processing capability of the image encoding apparatus, whereas some throughputs may fall a bit short of the maximum value according to a throughput or the number of repetitions for an image quality enhancement function.

In the embodiment, the case where processes of encoding and multiplexing audio data are included is described, whereas the embodiment is also applicable to the case where only image data is encoded.

In the embodiment, the case where multi-channel original image data is encoded is described, whereas the embodiment is also applicable to the case where one-channel original image data is encoded. In this case, all of available throughputs of the image encoding apparatus may be used for an image quality enhancement function allocated to the one-channel original image data.

As described above, the embodiment where the image encoding program 50 is stored (installed) in the storage unit 43 in advance is described, whereas the image encoding program 50 recorded in a storage medium, such as a compact disc read-only memory (CD-ROM) or a digital versatile disc ROM (DVD-ROM), may be provided.

**Claims**

1. An image encoding apparatus comprising:

   a calculation unit configured to calculate, from an encoding throughput for image data to be encoded that is obtained based on a parameter regarding an encoding throughput, and a maximum throughput of the image encoding apparatus, an available throughput that occurs in a process of encoding the image data to be encoded;
   an allocation unit configured to allocate, in accordance with the available throughput calculated by the calculation unit, a function of enhancing precision of encoding to the image data to be encoded; and
   an encoding unit configured to encode, by using the function allocated by the allocation unit, the image data to be encoded.

2. The image encoding apparatus according to claim 1, wherein the allocation unit determines, of a plurality of functions, based on a throughput involved in applying each function one time, an applicable maximum number of repetitions, a priority assigned to each function, and the available throughput, a function to be allocated and a number of repetitions of the function.

3. The image encoding apparatus according to claim 1,
   wherein, when the image data to be encoded is multi-channel image data,
   the calculation unit calculates, from a sum of encoding throughputs for channels that are obtained based on the parameter regarding an encoding throughput for image data of each channel, and the maximum throughput of the image encoding apparatus, the available throughput, and
   the allocation unit distributes the available throughput calculated by the calculation unit to each channel and allocates the function based on a throughput distributed to each channel to each channel.

4. The image encoding apparatus according to claim 3, wherein the allocation unit distributes, in accordance with a weight based on a priority assigned to each channel, the available throughput to each channel.

5. The image encoding apparatus according to claim 1,
   wherein the encoding unit includes an image encoding unit configured to encode the image data to be encoded, and an audio encoding unit configured to encode audio data to be encoded, and
   the encoding unit further includes a multiplexing unit configured to multiplex image data encoded by the image encoding unit, audio data encoded by the audio encoding unit, and data involved in multiplexing and synchronization of the encoded image data and the encoded audio data.

6. The image encoding apparatus according to claim 1, wherein the parameter regarding an encoding throughput includes any of a size of the image data to be encoded, a picture rate, a pixel bit depth, and an image format.

7. The image encoding apparatus according to claim 1, wherein the function includes any of a vector search function using a reduced image, a vector search function using a prediction image, and a prediction mode determination function.

8. An image encoding method causing a computer to execute a process, the process comprising:

   calculating, from an encoding throughput for image data to be encoded that is obtained based on a parameter regarding an encoding throughput, and a maximum throughput of an image encoding apparatus, an available throughput that occurs in a process of encoding the image data to be encoded;
   allocating, in accordance with the calculated available throughput, a function of enhancing precision of encoding to the image data to be encoded; and
   encoding, by using the allocated function, the image data to be encoded.

9. A computer-readable storage medium storing an image encoding program for causing a computer to execute a process, the process comprising:

calculating, from an encoding throughput for image data to be encoded that is obtained based on a parameter regarding an encoding throughput, and a maximum throughput of an image encoding apparatus, an available throughput that occurs in a process of encoding the image data to be encoded;

allocating, in accordance with the calculated available throughput, a function of enhancing precision of encoding to the image data to be encoded; and

encoding, by using the allocated function, the image data to be encoded.

# FIG. 1

PARAMETERS OF
ORIGINAL IMAGE DATA
OF EACH CHANNEL

ORIGINAL IMAGE DATA
OF EACH CHANNEL

ORIGINAL AUDIO DATA
OF EACH CHANNEL

10

IMAGE QUALITY
ENHANCEMENT
FUNCTION TABLE — 21

11
ACQUISITION
UNIT

12
CALCULATION
UNIT

ALLOCATION
UNIT — 13

14
IMAGE
ENCODING UNIT

16
MULTIPLEXING
UNIT

MULTIPLEXED
STREAM

15
AUDIO
ENCODING UNIT

# FIG. 2

| IMAGE QUALITY ENHANCEMENT FUNCTION | THROUGHPUT PER SECOND | MAXIMUM NUMBER OF REPETITIONS | ALLOCATION PRIORITY |
|---|---|---|---|
| VECTOR SEARCH USING 1/16 (LENGTH AND WIDTH 1/4)-REDUCED IMAGE | 6,000,000 | 16 | 1 |
| VECTOR SEARCH USING 1/4 (LENGTH AND WIDTH 1/2)-REDUCED IMAGE | 24,000,000 | 16 | 2 |
| VECTOR SEARCH USING PREDICTION IMAGE | 96,000,000 | 16 | 3 |
| PREDICTION MODE DETERMINATION | 600,000 | 64 | 4 |

21

# FIG. 3

EP 3 258 690 A1

# FIG. 4

```
                    ( IMAGE ENCODING PROCESSING )
                                  │
         ┌────────────────────────────────────────────┐
         │  CALCULATE MAXIMUM THROUGHPUT               │  S11
         │  OF IMAGE ENCODING APPARATUS                │
         └────────────────────────────────────────────┘
                                  │
         ┌────────────────────────────────────────────┐
         │  ACQUIRE PARAMETERS OF                      │  S12
         │  EACH CHANNEL                               │
         └────────────────────────────────────────────┘
                                  │
                         S13
                    /  HAS              \
                   < CHANNEL STRUCTURE   >─── NO
                    \ BEEN CHANGED?     /
                                  │ YES
         ┌────────────────────────────────────────────┐
         │  CALCULATE THROUGHPUT PER                   │  S14
         │  SECOND FOR EACH CHANNEL                    │
         └────────────────────────────────────────────┘
                                  │
         ┌────────────────────────────────────────────┐
         │  CALCULATE AVAILABLE THROUGHPUT             │  S15
         │  OF IMAGE ENCODING APPARATUS                │
         └────────────────────────────────────────────┘
                                  │
         ┌────────────────────────────────────────────┐
         │  ALLOCATE, TO EACH CHANNEL,                 │  S16
         │  IMAGE QUALITY ENHANCEMENT FUNCTION         │
         │  BASED ON AVAILABLE THROUGHPUT              │
         └────────────────────────────────────────────┘
                                  │
    S17                                                    S18
   ┌──────────────────────────────┐      ┌──────────────────────────────┐
   │  ENCODE ORIGINAL IMAGE DATA   │      │  ENCODE ORIGINAL AUDIO        │
   │  OF EACH CHANNEL              │      │  DATA OF EACH CHANNEL         │
   └──────────────────────────────┘      └──────────────────────────────┘
                                  │
         ┌────────────────────────────────────────────┐
         │  MULTIPLEX ENCODED IMAGE                    │  S19
         │  DATA AND ENCODED AUDIO DATA                │
         └────────────────────────────────────────────┘
                                  │
                         S20
              NO    /  IS ENCODING TO    \
             ──────< BE ENDED?            >
                    \                    /
                                  │ YES
                              ( END )
```

13

FIG. 5

FIG. 6

Europäisches
Patentamt

European
Patent Office

Office européen
des brevets

# EUROPEAN SEARCH REPORT

Application Number

EP 17 16 9225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/003719 A1 (KOANA MASAHIRO [JP]) 1 January 2009 (2009-01-01) | 1,2,5-9 | INV. H04N19/156 |
| Y | * paragraph [0035] - paragraph [0038]; figures 1,2 * <br> * paragraph [0043] - paragraph [0068]; figures 3-5 * | 3,4 | H04N19/42 H04N19/523 |
| X | US 2010/254619 A1 (FUKUHARA TAKAHIRO [JP] ET AL) 7 October 2010 (2010-10-07) * paragraph [0081] - paragraph [0089]; figure 1 * * paragraph [0113] - paragraph [0139]; figures 4,5 * * paragraph [0162] - paragraph [0170]; figures 11-13 * | 1,8,9 | |
| Y | EP 1 248 469 A1 (NEXTREAM SA [FR]) 9 October 2002 (2002-10-09) * paragraph [0020] - paragraph [0021] * * paragraph [0064] - paragraph [0075]; figures 3,4 * | 3,4 | |
| A | US 5 041 908 A (HENOT JEAN-PIERRE [FR]) 20 August 1991 (1991-08-20) * the whole document * | 1-9 | TECHNICAL FIELDS SEARCHED (IPC) <br> H04N |
| A | US 2015/036735 A1 (SMADI MOHAMMED NAWAF [CA] ET AL) 5 February 2015 (2015-02-05) * paragraph [0078] - paragraph [0088]; figures 8,5 * | 1-9 | |
| A | EP 1 662 794 A1 (SONY CORP [JP]) 31 May 2006 (2006-05-31) * paragraph [0045] - paragraph [0049]; figure 3 * | 1-9 | |

The present search report has been drawn up for all claims

| Place of search | Date of completion of the search | Examiner |
|---|---|---|
| The Hague | 2 November 2017 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 9225

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2017

| Patent document cited in search report | | Publication date | Patent family member(s) | | Publication date |
|---|---|---|---|---|---|
| US 2009003719 | A1 | 01-01-2009 | JP | 2009010608 A | 15-01-2009 |
| | | | US | 2009003719 A1 | 01-01-2009 |
| US 2010254619 | A1 | 07-10-2010 | CN | 101860740 A | 13-10-2010 |
| | | | JP | 2010244316 A | 28-10-2010 |
| | | | US | 2010254619 A1 | 07-10-2010 |
| EP 1248469 | A1 | 09-10-2002 | AT | 328445 T | 15-06-2006 |
| | | | CN | 1379591 A | 13-11-2002 |
| | | | DE | 60211790 T2 | 24-05-2007 |
| | | | EP | 1248469 A1 | 09-10-2002 |
| | | | FR | 2823049 A1 | 04-10-2002 |
| | | | JP | 4669190 B2 | 13-04-2011 |
| | | | JP | 2002314996 A | 25-10-2002 |
| | | | KR | 20020077074 A | 11-10-2002 |
| | | | MX | PA02002719 A | 25-07-2005 |
| | | | MY | 135393 A | 30-04-2008 |
| | | | TW | 563370 B | 21-11-2003 |
| | | | US | 2002181584 A1 | 05-12-2002 |
| US 5041908 | A | 20-08-1991 | DE | 68910016 D1 | 25-11-1993 |
| | | | DE | 68910016 T2 | 05-05-1994 |
| | | | EP | 0348321 A1 | 27-12-1989 |
| | | | FR | 2633477 A1 | 29-12-1989 |
| | | | US | 5041908 A | 20-08-1991 |
| US 2015036735 | A1 | 05-02-2015 | CA | 2920139 A1 | 05-02-2015 |
| | | | EP | 3028498 A1 | 08-06-2016 |
| | | | US | 2015036735 A1 | 05-02-2015 |
| | | | US | 2017126771 A1 | 04-05-2017 |
| | | | WO | 2015013811 A1 | 05-02-2015 |
| EP 1662794 | A1 | 31-05-2006 | CN | 1860792 A | 08-11-2006 |
| | | | EP | 1662794 A1 | 31-05-2006 |
| | | | JP | 3802521 B2 | 26-07-2006 |
| | | | JP | 2005080123 A | 24-03-2005 |
| | | | KR | 20060131725 A | 20-12-2006 |
| | | | TW | I249958 B | 21-02-2006 |
| | | | US | 2007014355 A1 | 18-01-2007 |
| | | | WO | 2005025226 A1 | 17-03-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004320157 A

- JP 2014529256 A